# EUROPÄISCHE PATENTSCHRIFT

(11) **EP 2 890 595 B1**
(45) Veröffentlichungstag und Bekanntmachung des Hinweises auf die Patenterteilung: **19.10.2016**
(21) Anmeldenummer: 13765629.4
(22) Anmeldetag: 14.08.2013
(51) Int. Cl.: B60T 11/18, F16D 25/08, F15B 7/08

(54) **ANORDNUNG UND VERFAHREN ZUR SICHERUNG EINES BETÄTIGUNGSGESTÄNGES EINES BETÄTIGUNGSPEDALS IN EINEM KRAFTFAHRZEUG**
ARRANGEMENT AND METHOD FOR SECURING AN ACTUATING ROD SYSTEM OF AN ACTUATING PEDAL IN A MOTOR VEHICLE
ENSEMBLE ET PROCÉDÉ DE BLOCAGE D'UNE TRINGLERIE DE COMMANDE D'UNE PÉDALE DE COMMANDE DANS UN VÉHICULE AUTOMOBILE

(30) Priorität: 31.08.2012 DE 102012215486
(43) Veröffentlichungstag der Anmeldung: 08.07.2015
(73) Patentinhaber: Schaeffler Technologies AG & Co. KG, 91074 Herzogenaurach (DE)
(72) Erfinder: WAGNER, Philippe, F-45000 Orléans (FR); WEY, Yannick, F-67800 Hoenheim (FR)
(86) Internationale Anmeldenummer: PCT/DE2013/200124
(87) Internationale Veröffentlichungsnummer: WO 2014/032666

(56) Entgegenhaltungen:
- DE-A1- 10 205 177
- DE-A1- 19 752 076
- DE-A1-102008 059 438

## Beschreibung

Die vorliegende Erfindung betrifft eine Anordnung und ein Verfahren zur Sicherung eines Betätigungsgestänges eines Betätigungspedals in einem Kraftfahrzeug. Das Betätigungsgestänge umfasst dabei insbesondere einen Geberzylinder mit einem Zylindergehäuse, einem daran angeordneten Kolben und einem Anschlagring zur Sicherung einer Kolbenstange innerhalb des Zylindergehäuses.

Geberzylinder werden zur hydraulischen Übertragung von Kräften eingesetzt. Diese beruht auf der Übertragung von Kraft durch ein Hydraulikmedium wie beispielsweise ein Mineralöl von einem Geberzylinder zu einem Nehmerzylinder. Bei der Betätigungsvorrichtung einer Kupplung eines brennkraftmaschinengetriebenen Automobils ist üblicherweise der Geberzylinder mit dem Kupplungspedal verbunden, so dass eine Betätigung des Kupplungspedals zu einer Bewegung des Kolbens im Geberzylinder führt, die über das Hydraulikmedium an den Nehmerzylinder übertragen wird und zu einem Betätigen der Kupplung, das heißt zu einem Einrücken oder Ausrücken der Kupplung führt.

Das Dokument DE 10 2008 059 438 A1 beschreibt eine Befestigung eines Betätigungsgestänges gemäß dem Stand der Technik.

Geberzylinder umfassen einen Zylinder mit einem Kolben in einem Gehäuse, wobei der Kolben zur Betätigung üblicherweise mit einer Kolbenstange verbunden ist. Aus dem Stand der Technik ist es bekannt, die Kolbenstange des Kolbens des Geberzylinders durch eine Halteklammer im Gehäuse des Zylinders zu fixieren, um so zu verhindern, dass Kolbenstange, Kolben und weitere Teile aus dem Inneren des Geberzylinders aus diesem herausrutschen. Diese Halteklammer wird zumeist über eine Clipverbindung mit dem Gehäuse verbunden. Diese Lösung hat den Nachteil, dass dann, wenn eine gewisse Festigkeit des Geberzylinders zu gewährleisten ist, sowohl die Halteklammer als auch der Teil des Gehäuses, an dem diese befestigt wird, eine gewisse Wandstärke aufweisen müssen. In axialer Richtung führt dies zu einem relativ hohen Bedarf an Bauraum. Die notwendige auszubildende Clipverbindung führt dazu, dass entsprechende Haltenasen oder ähnliches am Gehäuse ausgebildet werden müssen, wodurch das Werkzeug zur Herstellung des Gehäuses an Komplexität gewinnt. Insbesondere kommt es zu einer unerwünschten Gratbildung, da dieser Grad bei der Montage der Halteklammer regelmäßig abgerissen oder abgeschert wird, was zu unerwünschten Verschmutzungen und gegebenenfalls zu Qualitätsproblemen führen kann.

Hiervon ausgehend liegt der vorliegenden Erfindung die Aufgabe zugrunde, eine Anordnung für ein Betätigungsgestänge aufzuzeigen, welches die aus dem Stand der Technik bekannten Nachteile zumindest verringert und insbesondere eine Sicherung der Kolbenstange auf einfache Weise ermöglicht. Weiterhin soll ein entsprechendes Verfahren zur Sicherung der Kolbenstange im Geberzylinder angegeben werden.

Diese Aufgaben werden gelöst mit den Merkmalen der unabhängigen Ansprüche. Die jeweiligen abhängigen Ansprüche sind auf vorteilhafte Weiterbildungen gerichtet.

Gegenstand der Erfindung ist eine Anordnung zur Sicherung eines Betätigungsgestänges eines Betätigungspedals in einem Kraftfahrzeug. Hiervon wird insbesondere ein Geberzylinder umfasst, der insbesondere für ein hydraulisches Betätigungssystem geeignet ist, und zwar insbesondere für ein hydraulisches Betätigungssystem einer Reibungskupplung, bevorzugt einer Reibungskupplung, in einem brennkraftmaschinengetriebenen Fahrzeug. Der Geberzylinder umfasst einen Zylinder mit einem Kolben mit einer Kolbenstange, der in einem Zylindergehäuse in Richtung einer Bewegungsachse bewegbar ist. Weiterhin ist ein Anschlagring vorgesehen, durch welchen die Kolbenstange mit ihrem kugelförmigen Fuß hindurchgreift. Hierfür weist der Anschlagring eine entsprechende Öffnung, das heißt eine Bohrung, auf. Besonders bevorzugt ist der Anschlagring dabei außenseitig mit dem Zylindergehäuse verbunden und begrenzt die Beweglichkeit der Kolbenstange in eine Richtung der Bewegungsachse. Hierbei handelt es sich um die axiale Bewegung der Kolbenstange.

Die Bewegungsachse entspricht der Längsachse des Zylinders und auch des Gehäuses. Es handelt sich hierbei um die Richtung, um die der Kolben im Gehäuse hin- und herbewegt werden kann. Unter dem Anschlagring wird ein Element verstanden, welches ein Ende des Gehäuses außen umgreift. Der Anschlagring weist einen geschlossenen Umfang auf, der die Öffnung begrenzt. Bevorzugt weist der Anschlagring spezielle Befestigungselemente auf, mit denen er im äußeren Umfang des Gehäuses verbunden wird. Der Anschlagring wirkt also als Anschlag, der die Beweglichkeit der Kolbenstange in Richtung der Bewegungsachse begrenzt.

Die Verbindung zwischen dem Anschlagring und dem Zylindergehäuse wird bevorzugt stoffschlüssig, kraftschlüssig und/oder formschlüssig ausgebildet. Insbesondere ist es bevorzugt, den Anschlagring mit dem Gehäuse zu verschweißen oder zu verkleben und/oder eine Kraft und/oder formschlüssige Verbindung, wie beispielsweise eine Bajonettverbindung, auszubilden. Hierbei ist es insbesondere vorgesehen, dass die Anschlagfunktion von der Funktion der Verbindung mit dem Zylindergehäuse räumlich getrennt ist. So ist es möglich, einen Anschlag für die Kolbenstange bzw. für den Fuß der Kolbenstange zu generieren, der deutlich weniger axialen Bauraum benötigt, als die aus dem Stand der Technik bekannte Lösung, da die Festigkeit der Verbindung nicht innerhalb des Gehäuses, sondern außerhalb des Gehäuses und damit bauraumneutral gewährleistet werden kann. Dadurch ist es möglich, relativ klein bauende Geberzylinder auszubilden, und gleichzeitig die Kosten bei der Herstellung des Geberzylinders zu reduzieren, da neben einem deutlich einfacheren Werkzeug zur Herstellung des Gehäuses auch eine deutlich einfachere Montage als mit einer aus dem Stand der Technik bekannten Halteklammer möglich ist.

Zur sicheren Montage der Kolbenstange in dem Zylindergehäuse ist die Kolbenstange dabei so ausgebildet, dass sie durch die mittige Bohrung des Anschlagrings in das Zylindergehäuse einführbar und durch eine Rotation um ihre eigene Längsachse herum verriegelbar ist. Der Fuß der Kolbenstange weist dann wenigstens einen Anschlag auf, der in der verriegelten Position unter eine Abflachung des Anschlagrings untergreift, wodurch eine axiale Bewegung der Kolbenstange dann begrenzt wird, wenn dieser Anschlag an den Anschlagring anschlägt. Der Anschlagring weist hierfür im Bereich seiner Bohrung Abflachungen auf, die insbesondere mit Abflachungen der Kolbenstange und ihres Fußes korrespondieren. Auf diese Weise kann die Kolbenstange in einer ersten Ausrichtung durch die Bohrung des Anschlagrings hindurchgeführt werden und durch ein Verdrehen in eine verriegelte Position gebracht werden, wo die Abflachungen der Kolbenstange und des Fußes der Kolbenstange von den Abflachungen des Anschlagrings abweichen. In dieser Position ist dann eine Bewegung der Kolbenstange aus dem Zylindergehäuse heraus nicht mehr möglich.

Des weiteren ist ein zusätzlicher Sicherungsring an der fußabgewandten Seite des Anschlagrings vorhanden und vorgesehen. Auch dieser Sicherungsring weist eine im Wesentlichen mittige Bohrung auf, durch die der kugelförmige Fuß und die Kolbenstange hindurchgreifen können. Zur Sicherung der Kolbenstange im Zylindergehäuse existiert ein gesicherter Zustand des Geberzylinders, in dem der Sicherungsring so im Bezug zum Abschlagring positioniert ist, dass Sicherungselemente des Sicherungsrings zum einen durch die Bohrung des Anschlagrings hindurchgreifen, und zum anderen umfangsmäßig in Bezug auf die Längsachse des Zylindergehäuses so positioniert sind, dass sie von den Abflachungen des Anschlagrings abweichen, so dass der Fuß der Kolbenstange auch bei Verdrehungen, die von der verriegelten Position der Kolbenstange abweichen, nun bei entsprechenden axialen Bewegungen zumindest auch gegen wenigstens ein Sicherungselement anschlagen, wodurch entsprechend eine axiale Bewegung des Fußes begrenzt wird, in dem eine Bewegung aus dem Zylindergehäuse hinaus verhindert wird.

Gemäß einer vorteilhaften Weiterbildung der Erfindung ist es vorgesehen, dass die Bohrung des Sicherungsrings ebenfalls Abflachungen aufweist, die beispielsweise im Wesentlichen den Abflachungen der Bohrung des Anschlagrings entsprechen können, wobei diese Abflachungen im gesicherten Zustand der Kolbenstange oberhalb eines von den Abflachungen des Anschlagrings abweichenden, im Wesentlichen gekrümmten Bereichs liegen und wobei in diesem gekrümmten Bereich des Anschlagrings die Sicherungselemente des Sicherungsrings durch die Bohrung des Anschlagrings hindurchgreifen. Auf diese Weise kann ein Anschlagen des Fußes gegen die Abflachungen des Sicherungsrings oder gegen die Sicherungselemente auch in den Bereichen realisiert werden, in denen die Abflachungen des Anschlagrings eine axiale Bewegung der Kolbenstange nicht mehr begrenzen.

Um auf einfache Weise Anschlagsbereiche für den Fuß der Kolbenstange innerhalb des Zylindergehäuses mittels des Sicherungsrings bereitzustellen und um diesen auch gegen Relativbewegungen relativ zum Zylindergehäuse zu schützen, ist es weiter vorgesehen, dass die Sicherungselemente in der Art eines Clips an einem Schaft ausgebildet sind, wobei der Clip so am vorderen Ende des Schafts bereitgestellt wird und der Schaft eine entsprechende Dimension aufweist, so dass der Sicherungsring so hinter einen gekrümmten Bereich des Anschlagrings eingreift und verdrehsicher mit dem Anschlagring verbunden ist. Da der Anschlagring selber verdrehsicher mit dem Zylindergehäuse verbunden ist, ist somit eine stabile Lage sowohl von Anschlagring als auch Sicherungsring innerhalb des Zylindergehäuses gewährleistet.

Zur Ermöglichung der Einführung der Kolbenstange in einer ersten Position und der Verriegelung der Kolbenstange innerhalb einer zweiten Position ist es erfindungsgemäß in einer Weiterbildung vorgesehen, dass die Kolbenstange mit ihrem Fuß an achsparallel gegenüberliegenden Seiten je eine Abflachung aufweist, der Fuß der Kolbenstange im Bereich der zwischen diesen Abflachungen wulstförmig oder kugelförmig ausgebildet ist und die Abflachungen der Kolbenstange mit den Abflachungen von Anschlagring und/oder Sicherungsring korrespondieren, so dass die Kolbenstange in einem nicht gesicherten Zustand mit ihrem Fuß durch die Bohrungen von Anschlagring und Sicherungsring in das Zylindergehäuse einführbar sind.

Weiterhin ist die Kolbenstange dann so ausgebildet, dass die nach Einführung durch die Bohrungen durch eine Rotation in ihre Längsachse verriegelbar ist.

Die Anordnung aus Kolbenstange und Sicherungsring, gegebenenfalls auch Anschlagring, soll vorzugsweise so ausgebildet sein, dass die Kolbenstange nach Einführung durch die Bohrungen durch eine Rotation ihre Längsachse zumindest verriegelbar, das heißt verriegelbar gegenüber dem Anschlagring ist und durch eine Rotation von Sicherungsring und Kolbenstange diese nun sicherbar ist, das heißt, dass ein gesicherter Zustand des Geberzylinders vorliegt. In diesem Zustand kann auch durch eine axiale Verdrehung der Kolbenstange, das heißt eine Verdrehung um ihre eigene Längsachse, diese nicht mehr aus dem Geberzylinder herausgeführt werden.

Um das Eindringen von Schmutz in das Zylindergehäuse in dem Bereich des Kolbens zu vermeiden, ist es vorteilhafter Weise vorgesehen, dass zwischen dem Anschlagring und dem Sicherungsring ein Abstreifring, vorzugsweise aus einem Elastomer, zum Abstreifen von Schmutz von der Kolbenstange angeordnet ist.

In einer bevorzugten Ausführungsform ist diese ganze Anordnung dabei so ausgebildet, dass der Abstreifring im Wesentlichen ausschließlich durch Anpresskräfte zwischen dem Anschlagring und dem Sicherungsring in axialer Position gehalten wird und/oder mit der Kolbenstange in horizontaler Richtung im Wesentlichen senkrecht zur Achse der Kolbenstange beweglich ist. Hierdurch kann auf die Bereitstellung weiterer Verbindungselemente verzichtet werden.

Um die Befestigung des Sicherungsrings am Zylindergehäuse und/oder am Anschlagring auf möglichst einfache Art und Weise zu gewährleisten, ist der Abstreifring in einer bevorzugten Ausführungsform so ausgebildet, dass er Öffnungen zum Durchgreifen von Sicherungselementen des Sicherungsrings aufweist.

Verfahrensmäßig ist es erfindungsgemäß zur Sicherung des Betätigungsgestänges vorgesehen, dass die Kolbenstange zuerst durch eine Bohrung eines Sicherungsrings und anschließend durch eine Bohrung des Anschlagrings hindurch in das Zylindergehäuse eingeführt wird. Ist auch ein Abstreifring mit einer entsprechenden Bohrung vorgesehen, so wird die Kolbenstange durch diese Bohrung als zweites nach der Hindurchführung durch den Sicherungsring hindurchgeführt.

Weiterhin ist die Kolbenstange dabei so ausgeführt, dass sie einen Fuß aufweist und zur Verriegelung in axiales Herausführen aus dem Zylindergehäuse um ihre Längsachse gedreht wird, so dass der Fuß bei axialen Bewegungen gegen die fußseitige Fläche des Anschlagrings stößt. Zur Sicherung der Kolbenstange wird der Sicherungsring und die Längsachse der Kolbenstange, zu einem Zeitpunkt nachdem die Kolbenstange durch den Sicherungsring hindurchgeführt wurde, relativ zueinander verdreht. Die Sicherungselemente des Sicherungsrings werden dann durch die Bohrung des Anschlagrings und gegebenenfalls auch durch Öffnungen des Abstreifrings hindurchgeführt und die Sicherungselemente werden dabei so positioniert, dass sie von Abflachungen des Anschlagrings verschieden positioniert werden. Der Sicherungsring wird dann so am Anschlagring oder am Zylindergehäuse oder an beiden befestigt, dass die Sicherungselemente relativ zur Längsachse des Zylindergehäuses verdrehsicher bereitgestellt sind, so dass der Fuß der Kolbenstange unabhängig von der relativen Winkelposition der Kolbenstange bei axialen Bewegungen entweder durch die Abflachungen des Anschlagrings oder die Sicherungselemente des Sicherungsrings in seiner Bewegungsfreiheit zumindest axial begrenzt wird.

Ein Ausführungsbeispiel der Erfindung, auf das diese aber nicht begrenzt ist und aus der sich weitere erfindungsgemäße Merkmale ergeben können, ist in den folgenden Figuren dargestellt. Es zeigen:
- Figur 1: einen Längsschnitt durch einen Geberzylinder,
- Figur 2: einen Schnitt A-A durch den Geberzylinder der Figur 1,
- Figur 3: eine perspektivische Darstellung des vorderen Teils des Geberzylinders gemäß Figur 1 mit Sicherungsring,
- Figur 4: eine weitere perspektivische Darstellung des Geberzylinders mit Sicherungsring und Abstreifring,
- Figur 5: den Kolben des erfindungsgemäßen Geberzylinders im Schnitt und
- Figur 6: den Anschlagring mit Kolbenstange in unterschiedlich verdrehten Positionen der Kolbenstange.

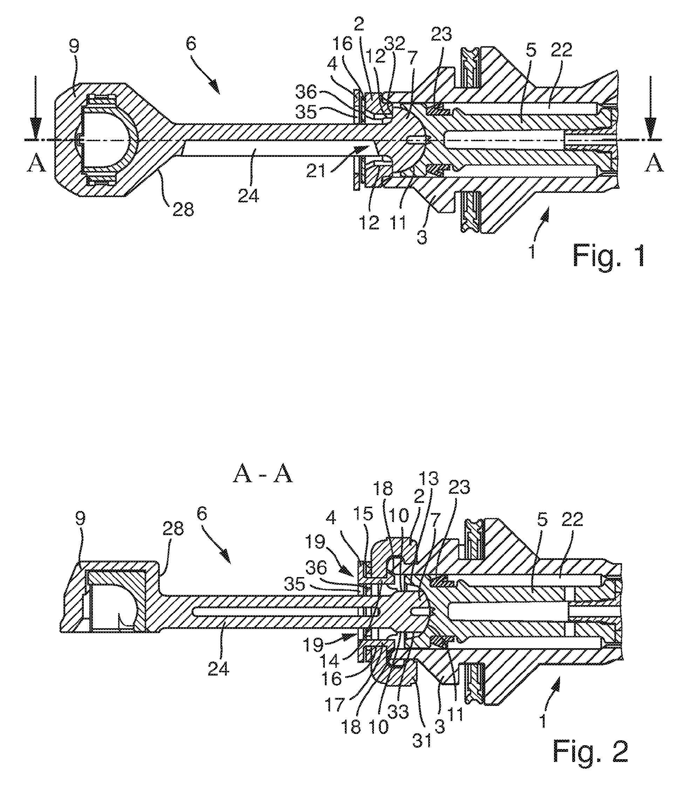

Figur 1 zeigt den Längsschnitt durch einen Geberzylinder 1, der mit einem nicht dargestellten Betätigungspedals eines Kraftfahrzeugs in Verbindung steht. Der Geberzylinder 1 umfasst ein Zylindergehäuse 3, in das eine axiale Bohrung 22 eingebracht ist. In der Bohrung 22 ist ein Kolben 5 angeordnet, der über Dichtungsringe 23, 23 gegenüber der Bohrung 22 des Zylindergehäuses 3 abgedichtet ist. Der Kolben 5 liegt mit seiner einen Seite an einer Feder 8 an, die sich an der Gehäusewand des Zylindergehäuses 3 abstützt. An der anderen, der Feder 8 abgewandten Seite weist der Kolben 5 eine vorzugsweise kugelförmige Vertiefung 11 auf, die der Aufnahme eines kugelförmigen Fußes 7 einer Kolbenstange 6 dient.

Der Fuß 7 liegt mit seinem Außenumfang am Innenumfang der Vertiefung 11 an. Die Kolbenstange 6 weist einen Querschnitt auf, der jeweils kleiner ist als der Querschnitt des Fußes 7 bzw. der Querschnitt des Kopfes 9 (Figur 2) der Kolbenstange 6. Bei entspannter Feder 8 ragt die Kolbenstange 6 zu etwa 2/3 über das offene Ende des Zylindergehäuses 3 hinaus. Ein Anschlagring 2 verschließt das offene Ende des Zylindergehäuses 3. Die Kolbenstange 6 ragt durch eine mittige Bohrung 36 des Anschlagrings 2 in das Zylindergehäuse 3 hinein

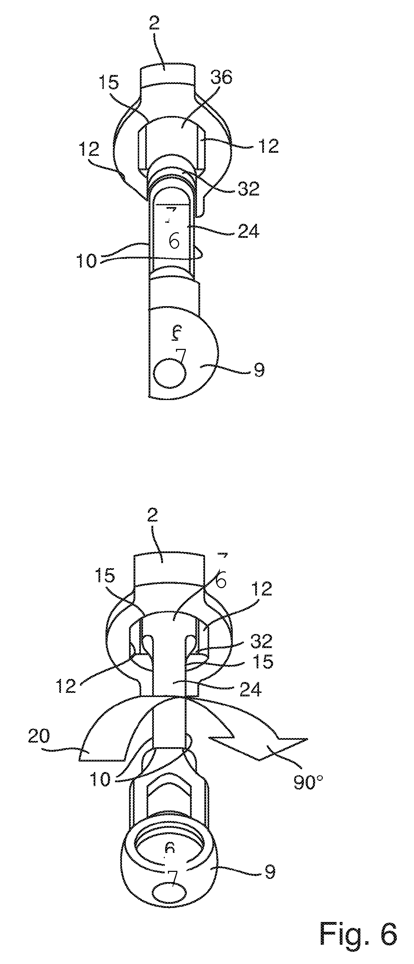

Die Fig. 1 zeigt die Kolbenstange 6 bei unbelastetem Betätigungspedal. Die entlastete Feder 8 beaufschlagt den Kolben 5, der den Fuß 7 der Kolbenstange 6 an die dem Kolben 5 zugewandte Unterseite des Anschlagrings 2 drückt. Bei einer Betätigung des nicht gezeigten Betätigungspedals wird die Kolbenstange 6 mit ihrem Hals 24 durch die mittige Bohrung 36 des Anschlagrings 2 in das Innere des Zylindergehäuses 3 verschoben. Der Fuß 7 der Kolbenstange 6 liegt mit seinen Abflachungen 10 an Abflachungen 13 der Vertiefung 11 des Kolbens 5 (Figur 6) an. Bei einer Betätigung bzw. Entlastung des Betätigungspedals verschiebt die Kolbenstange 6 den Kolben 5 gegen die Kraft der Feder 8 bzw. schiebt die Feder 8 den Kolben 5 innerhalb des Zylindergehäuses 3 in seine Ausgangsstellung im Bereich des Anschlagrings 2. In verbautem Zustand wird die Kolbenstange 6 in der mittigen Bohrung 36 des Anschlagrings 2 geführt. Die Kolbenstange 6 befindet sich in einer verdrehten, verriegelten Position innerhalb des Zylindergehäuses 3. Der Fuß 7 weist Anschläge 32 radial außenliegend auf, mit denen er gegen die fußseitige innere Begrenzung des Anschlagrings 2 anstößt. Diese inneren Begrenzungen des Anschlagrings 2 entsprechen den Abflachungen 12 des Anschlagrings, wie sie in der Figur 6 dargestellt sind. Auf der fußabgewandten Seite des Anschlagrings 2 ist der Sicherungsring 4 mit seiner Bohrung 35 bereitgestellt, durch die die Kolbenstange 6 hindurchgreift. Zwischen dem Sicherungsring 4 und dem Anschlagring 2 eingeklemmt befindet sich der Abstreifring 16, welcher dafür sorgt, dass keine Verschmutzung durch die Kolbenstange in das Zylindergehäuse eindringen kann. Zum Durchgreifen der Kolbenstange 6 weist auch der Abstreifring 16 eine entsprechende Bohrung 21 auf.

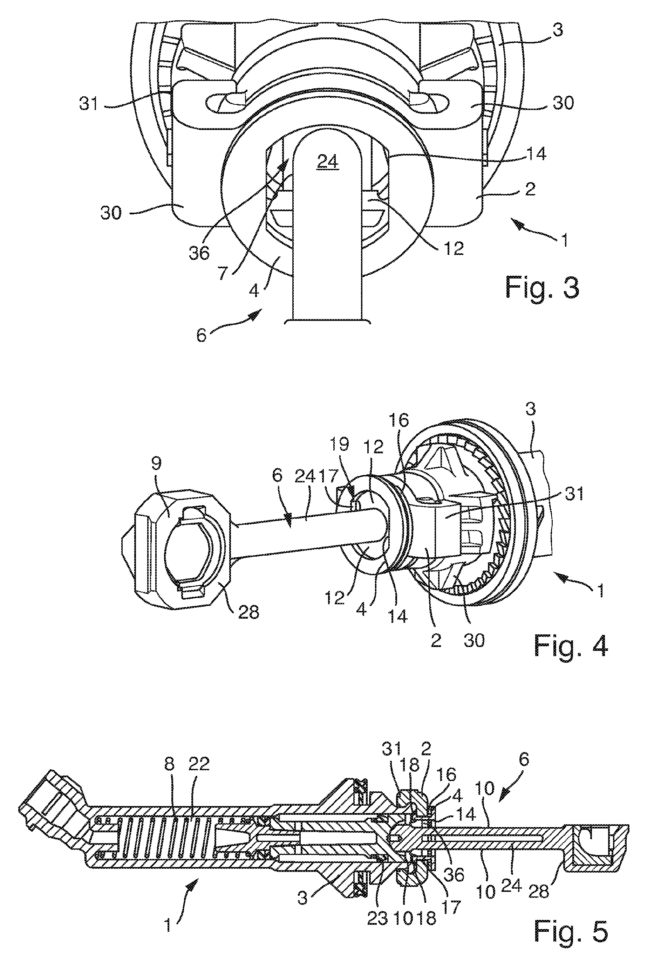

Die Figur 2 zeigt einen Schnitt A-A durch den Geberzylinder der Figur 1. Es ist erkennbar, dass der Fuß 7 eine Kontur aufweist, so dass er Bereiche mit oben liegenden, radialen Anschlägen 32, wie in Figur 1 gezeigt aufweist und auf der anderen Seite davon umfangsmäßig beabstandet Abflachungen 10, die mit Abflachungen 13 der Vertiefung 11 des Kolbens 5 korrespondieren. Auf diese Weise können die Kolbenstange 6 und der Kolben 5 nur gemeinsam verdreht werden. Der Anschlagring 2 weist in dieser Winkellage gekrümmte Bereiche 15 auf, die die Bohrung 36 so ausgeführt darstellen, dass bei einer um 90° verdrehten Kolbenstange 6 der Fuß 7 mit seinen Anschlägen 32 durch diesen gekrümmten Bereich 15 des Anschlagrings 2 hindurchgeführt werden kann. Zur radialen Begrenzung dieses Bereichs weist der Sicherungsring 4 hier Abflachungen 14 auf, wie sie in den Figuren 3 und 4 dargestellt sind, denen in dieser perspektivischen Darstellung als Sicherungselemente ein Clipelement, bestehend aus Schaft 17 und Clip 18, entspricht, die zumindest auf gegenüberliegenden Seiten des Sicherungsrings 4 bereitgestellt sind. Mit dem Clip 18 am Schaft 17 greift der Sicherungsring 4 unter den Anschlagring 2 und verspannt hier zur Drehsicherung und auch zur Sicherung gegen axiale Bewegungen den Sicherungsring 4. Gleichzeitg wird hierdurch auch realisiert, dass der Abstreifring 16 zwischen Anschlagring 2 und Sicherungsring 4 eingeklemmt wird. Durch die Schäfte 17 des Sicherungsrings 4 wird der Radius der Bohrung 36 des Anschlagrings 2 im Bereich 15 so eingeschränkt, dass der Fuß 7 in keiner verdrehten Position hier hindurch passt. Die Anschläge 32 des Fußes 7 würden jeweils bereits vor erreichen der Bohrungen 35, 36 gegen den Clip 18 anschlagen. Auf diese Weise wird eine Sicherung der Kolbenstange 6 innerhalb des Geberzylinders 1 so realisiert, dass auch Verdrehungen der Kolbenstange 6 um ihre Längsachse herum nicht zu einem fehlerhaften Herausrutschen der Kolbenstange 6 aus dem Geberzylinder 1 führen können.

In der Figur 3 ist eine frontale Draufsicht auf den Vorderbereich des Geberzylinders 1 dargestellt. Der Anschlagring 2 ist über einen Schnappverschluss 30 mit Schnapphaken 31 außen formschlüssig am Zylindergehäuse 3 befestigt. Der Anschlagring 2 weist eine Bohrung 36 mit Abflachungen 12 auf, die in den Bereichen der Bohrung 36 bereitgestellt sind, die im Wesentlichen senkrecht zur Verbindungslinie zwischen den Schnapphaken 31 des Anschlagrings 2 liegen. In der hier verriegelten Position der Kolbenstange 6 greifen nicht erkennbare Anschläge 32 des Fußes 7 unter die Abflachungen 12 des Anschlagrings 2. Unterhalb der Abflachungen 14 des Sicherungsrings 4 befinden sich die Sicherungselemente in Form von Schäften 17 und Clips 18, welche an dieser Stelle den Radius der Bohrung 36 lokal verringern.

Die Figur 4 zeigt eine weitere perspektivische Darstellung vom oberen Teil des Geberzylinders mit Kolbenstange 6 und Kopf der Kolbenstange 9, wobei die axiale Bewegung der Kolbenstange 6 auch dadurch begrenzt wird, dass die Unterkante 28 des Kopfes 9 der Kolbenstange 6 gegen den Sicherungsring 4 bei einer entsprechenden axialen Verstellung anschlagen würde. Durch Öffnungen 19 können die Schäfte 17 und Clips 18 in den Abflachungen 14 des Sicherungsrings 4 durch den Abstreifring 16 hindurchgreifen. Als gestrichelte Linie sind hier die Position der Abflachungen 12 des Anschlagrings 2 dargestellt. Sie befinden sich im Wesentlichen senkrecht zu den Abflachungen 14 und damit auch zu den Clips 18, die hier nicht erkennbar innerhalb des Zylindergehäuses 3 liegen.

Die Figur 5 zeigt einen weiteren Querschnitt durch den Geberzylinder 1. Durch eine Betätigung der Kolbenstange 6 in Betätigungsrichtung wird der Kolben 5 gegen die Feder 8 in die Bohrung 22 des Geberzylinders 1 hineingepresst.

Die Figur 6 zeigt in zwei voneinander getrennten Darstellungen jeweils einen Anschlagring 2 mit je einer mittigen Bohrung 36, deren Außenkontur die Abflachungen 12 aufweist. Die Abflachungen 12 kommunizieren mit den weiteren Abflachungen 10, die am Hals 24 und am Fuß 7 der Kolbenstange 6 angebracht sind. Ist die Kolbenstange 6 so positioniert, dass je eine Abflachung 10 des Kolbenhalses 24 je einer Abflachung 12 der mittigen Bohrung 36 gegenübersteht, ist die Kolbenstange 6 in das Zylindergehäuse 3 einführbar. An dem, dem Kolben 5 zugewandten Rand des Fußes 7 der Kolbenstange 6 sind Anschläge 32 vorgesehen. Bei einer Verdrehung der in das Zylindergehäuse 3 eingeführten Kolbenstange 6 um etwa 90 ° (Pfeil 20) untergreifen die Anschläge 32 des Fußes 7 den Anschlagring 2 im Bereich der Abflachungen 12 der mittigen Bohrung 36. Nach Ausführung der 90 °-Drehung der Kolbenstange 6 stehen die Abflachungen 10 des Halses 24 und des Fußes 7 der Kolbenstange 6 etwa in einem Winkel von 90° zu den Abflachungen 12 der mittigen Bohrung 36 des Anschlagrings 2. Da die Anschläge 32 nunmehr die Abflachung 12 der mittigen Bohrung 36 des Anschlagrings 2 hintergreifen, ist ein axiales Herausziehen der Kolbenstange 6 in dieser Position nicht mehr möglich.

Auf die Darstellung des Sicherungsrings 4 und dem Abstreifrings 16 wurde hier der Übersichtlichkeit halber verzichtet, um im Wesentlichen die Funktion des Anschlagrings 2 zu beschreiben. Die Funktion insbesondere des Sicherungsrings 4 wurde bereits zu den Figuren 1 bis 4 beschrieben. Es ergibt sich, dass diese Sicherung des Sicherungsrings 4 insbesondere dann zum Tragen kommt, wenn durch eine von außen wirkende Kraft die Kraft der Feder 8 des Geberzylinders 1 überwunden wird und gleichzeitig eine axiale Verdrehung der Kolbenstange 6 erfolgt. Dann verhindern die Schäfte 17 und Clips 18 des Sicherungsrings 4 in den gekrümmten Bereichen 15 des Anschlagrings 2 sicher ein Herausrutschen des Fußes 7, da dieser aufgrund seiner Formgebung auch nicht in einer von der verriegelten Position abweichenden Position näher durch die Bohrung 35 des Sicherungsrings 4 passen würde. Die Anschläge 32 des Fußes 7 würden dann entsprechend gegen die Clips 18 anstoßen.

Durch den Sicherungsring 4 wird also insbesondere bei Überwindung der Kraft der Feder 8 oder auch bei nicht vorliegender Feder 8 im Falle eines anderen Wirkprinzips des Geberzylinders 1 oder während eines Transportes eine Sicherung der Kolbenstange 6 auch dann gewährleistet, wenn die Verriegelung der Kolbenstange 6, aus welchem Grund auch immer, überwunden wird.

### Bezugszeichenliste

- 1: Geberzylinder
- 2: Anschlagring
- 3: Zylindergehäuse
- 4: Sicherungsring
- 5: Kolben
- 6: Kolbenstange
- 7: Fuß
- 8: Feder
- 9: Kopf
- 10: Abflachung
- 11: Vertiefung
- 12: Abflachung
- 13: Abflachung
- 14: Abflachung
- 15: Bereich
- 16: Abstreifring
- 17: Schaft
- 18: Klipp
- 19: Öffnung
- 20: Pfeil
- 21: Bohrung
- 22: Bohrung
- 23: Dichtungsring
- 24: Hals
- 28: Unterkante
- 30: Schnappverschluss
- 31: Schnapphaken
- 32: Anschlag
- 35: Bohrung
- 36: Bohrung

## Patentansprüche

1. Anordnung zur Sicherung eines Betätigungsgestänges eines Betätigungspedals in einem Kraftfahrzeug, umfassend
- - einen Geberzylinder (1), an dessen einem Ende ein Anschlagring (2) für einen, im Zylindergehäuse (3) stehenden Kolben (5) angeordnet ist und
- -eine im wesentlichen axial betätigte Kolbenstange (6), deren kugelförmigen Fuß (7) eine mittige Bohrung (36) des Anschlagrings (2) durchgreift und den Kolbenkopf beaufschlagt,
**dadurch gekennzeichnet, dass**
ein Sicherungsring (4) an der fußabgewandten Seite des Anschlagrings (2) vorhanden ist,
der Sicherungsring (4) eine im Wesentlichen mittige Bohrung (35) aufweist, durch die der kugelförmige Fuß (7) durchgreift,
die Bohrung (36) des Anschlagsringes (2) Abflachungen (12) aufweist,
der Sicherungsring (4) Sicherungselemente (17, 18) umfasst, die durch die Bohrung (36) des Anschlagringes (2) durchgreifen,
die Kolbenstange (6) so ausgebildet ist, dass sie durch die mittige Bohrungen (35, 36) in das Zylindergehäuse (3) einführbar und durch eine Rotation um eine Längsachse der Kolbenstange (6) verriegelbar ist,
wobei der Fuß (7) der Kolbenstange (6) wenigstens einen Anschlag (32) aufweist, der in der verriegelten Position unter eine Abflachung (12) des Anschlagsringes (2) untergreift und bei einer axialen Bewegung der Kolbenstange (6) durch ein Anschlagen an den Anschlagring (2) eine Bewegung des Fußes (7) aus den Zylindergehäuse (3) hinaus verhindert, und
ein gesicherter Zustand des Geberzylinders (1) existiert, in dem der Sicherungsring (4) so in Bezug zum Anschlagring (2) positioniert ist, dass die Sicherungselemente (17, 18) des Sicherungsringes (4) umfangsmäßig in Bezug zur Kolbenstange (6) von den Abflachungen (12) des Anschlagringes (2) abweichend positioniert sind und so der Fuß (7) in jeder Winkelstellung der Kolbenstange (6) bei einer axialen Bewegung mit dem Anschlag (32) wenigstens gegen ein Element aus der Gruppe Abflachung (12) oder Sicherungselement (17, 18) anschlägt und dadurch ein Bewegung des Fußes (7) aus dem Zylindergehäuse (3) hinaus verhindert wird.

2. Anordnung nach Anspruch 1, **dadurch gekennzeichnet, dass** die Bohrung (35) des Sicherungsringes (4) Abflachungen (14) aufweist,
diese Abflachungen (14) im gesicherten Zustand oberhalb eines gekrümmten Bereiches (15) des Anschlagringes (2) liegen, der von den Abflachungen (12) verschieden ist,
und dass die Sicherungselmente (17, 18) in diesen gekrümmten Bereich (15) durch die Bohrung (36) durchgreifen.

3. Anordnung nach Anspruch 1 oder 2, **dadurch gekennzeichnet, dass** die Sicherungselemente in der Art eines Klipps (18) an einem Schaft (17) ausgebildet sind, wobei der Klipp (18) am vorderen Ende des Schafts (17) bereitgestellt wird und hinter einen gekrümmten Bereich (15) des Anschlagringes (2) eingreift und so den Sicherungsring (4) verdrehsicher mit dem Anschlagsring (2) verbindet.

4. Anordnung nach einem der vorherigen Ansprüche, **dadurch gekennzeichnet, dass** die Kolbenstange (6) mit ihrem Fuß (7) an achsparallel gegenüberliegenden Seiten je eine Abflachung (10) aufweist
der Fuß (7) der Kolbenstange (6) im Bereich zwischen den Abflachungen (10) wulstförmig ausgebildet ist,
und die Abflachungen (10) mit den Abflachungen (12, 14) des Anschlagringes (2) und des Sicherungsringes (4) korrespondieren, so dass
die Kolbenstange (6) in einem nicht gesicherten Zustand mit ihrem Fuß (7) durch die Bohrungen (35, 36) in das Zylindergehäuse (3) einführbar ist.

5. Anordnung nach Anspruch 4, **dadurch gekennzeichnet, dass** die Kolbenstange (6) so ausgebildet ist, dass sie nach Einführung durch die Bohrungen (35, 36) durch eine Rotation um eine Längsachse der Kobenstange (6) verriegelbar ist.

6. Anordnung nach Anspruch 4, **dadurch gekennzeichnet, dass** die Kolbenstange (6) und der Sicherungsring (4) so ausgebildet sind, dass die Kolbenstange (6) nach Einführung durch die Bohrungen (35, 36) durch eine Rotation um ihre Längsachse verriegelbar und durch eine Rotation des Sicherungsringes (4) um die gleiche Achse sicherbar ist, d. h. ein gesicherter Zustand des Geberzylinders (1) vorliegt.

7. Anordnung nach einem der vorherigen Ansprüche, **dadurch gekennzeichnet, dass** zwischen dem Anschlagring (2) und dem Sicherungsring (4) ein Abstreifring (16) vorzugsweise aus einem Elastomer zum Abstreifen von Schmutz von der Kolbenstange (6) angeordnet ist.

8. Anordnung nach Anspruch 7, **dadurch gekennzeichnet, dass** der Abstreifring (16) im Wesentlichen ausschließlich durch Anpresskräfte zwischen dem Anschlagring (2) und dem Sicherungsring (4) in axialer Position gehalten wird und/oder mit der Kolbenstange (6) in horizontaler Richtung im Wesentlichen senkrecht zur Achse der Kolbenstange (6) beweglich ist.

9. Anordnung nach einem der Ansprüche 7 oder 8, **dadurch gekennzeichnet, dass** der Abstreifring (16) Öffnungen zum Durchgreifen von Sicherungselementen (17, 18) des Sicherungsringes (14) aufweist.

10. Verfahren zur Sicherung eines Betätigungsgestänges eines Betätigungspedals in einem Kraftfahrzeug, wobei eine Kolbenstange (6) durch eine Bohrung (36) eines Anschlagringes (2) hindurch in ein Zylindergehäuse (3) eingeführt wird,
die Kolbenstange (6) einen Fuß (7) aufweist,
die Kolbenstange (6) zur Verriegelung gegen axiales Herausführen um ihre Längsachse gedreht wird, so dass der Fuß (7) bei axialen Bewegungen gegen die fußseitige Fläche des Anschlagringes (2) stoßen kann, **dadurch gekennzeichnet, dass** die Kolbenstange (6) vor die Hindurchführung durch die Bohrung (36) des Anschlagringes (2) durch eine Bohrung (35) eines Sicherungsringes (4) hindurchgeführt wird,
der Sicherungsring (4) und die Längsachse der Kolbenstange (6) relativ zu einander verdreht werden,
Sicherungselemente (17, 18) des Sicherungsrings (4) durch die Bohrung (36) des Anschlagringes (2) hindurch bewegt werden und
der Sicherungsring (4) so am Anschlagring (2) und/oder am Zylindergehäuse (3) befestigt wird, dass die Sicherungselemente (17, 18) relativ zur Längsachse des Zylindergehäuse (3) verdrehsicher innerhalb des Zylindergehäuses (3) bereitgestellt werden, dass der Fuß (7), zumindest bei Winkelpositionen relativ zur Längsachse der Kolbenstange (6), in der er bei axialen Bewegungen nicht gegen den Anschlagring (2) anstoßen würde, gegen die Sicherungselemente (17, 18) stoßen würde.

## Claims

1. Arrangement for securing an actuating linkage of an actuating pedal in a motor vehicle, comprising
- a master cylinder (1), at the one end of which a stop ring (2) for a piston (5) which lies in the cylinder housing (3) is arranged, and
- a substantially axially actuated piston rod (6), the spherical base (7) of which engages through a central bore (36) of the stop ring (2) and loads the piston head,
**characterized in that**
a securing ring (4) is present on that side of the stop ring (2) which faces away from the base,
the securing ring (4) has a substantially central bore (35), through which the spherical base (7) engages,
the bore (36) of the stop ring (2) has flattened portions (12),
the securing ring (4) comprises securing elements (17, 18) which engage through the bore (36) of the stop ring (2),
the piston rod (6) is configured in such a way that it can be introduced through the central bores (35, 36) into the cylinder housing (3) and can be locked by way of a rotation about a longitudinal axis of the piston rod (6),
the base (7) of the piston rod (6) having at least one stop (32) which, in the locked position, engages under a flattened portion (12) of the stop ring (2) and, in the case of an axial movement of the piston rod (6), prevents a movement of the base (7) out of the cylinder housing (3) by coming into contact with the stop ring (2), and
a secured state of the master cylinder (1) prevailing, in which the securing ring (4) is positioned in relation to the stop ring (2) in such a way that the securing elements (17, 18) of the securing ring (4) are positioned circumferentially in relation to the piston rod (6) so as to deviate from the flattened portions (12) of the stop ring (2), and the base (7) thus comes into contact by way of the stop (32) at least against one element of the group comprising flattened portion (12) or securing element (17, 18) in every angular position of the piston rod (6) in the case of an axial movement, and a movement of the base (7) out of the cylinder housing (3) is prevented as a result.

2. Arrangement according to Claim 1, **characterized in that** the bore (35) of the securing ring (4) has flattened portions (14),
the said portions (14) lie, in the secured state, above a curved region (15) of the stop ring (2), which region (15) is different from the flattened portions (12),
and **in that** the securing elements (17, 18) engage through the bore (36) into the said curved region (15).

3. Arrangement according to Claim 1 or 2, **characterized in that** the securing elements are configured in the manner of a clip (18) on a shank (17), the clip (18) being provided at the front end of the shank (17) and engaging behind a curved region (15) of the stop ring (2) and thus connecting the securing ring (4) to the stop ring (2) in a manner which is secured against rotation.

4. Arrangement according to one of the preceding claims, **characterized in that** the piston rod (6) with its base (7) has in each case one flattened portion (10) on sides which lie opposite one another in an axially parallel manner,
the base (7) of the piston rod (6) is of bead-shaped configuration in the region between the flattened portions (10),
and the flattened portions (10) correspond with the flattened portions (12, 14) of the stop ring (2) and the securing ring (4), with the result that the piston rod (6) can be introduced in an unsecured state with its base (7) through the bores (35, 36) into the cylinder housing (3).

5. Arrangement according to Claim 4, **characterized in that** the piston rod (6) is configured in such a way that, after introduction through the bores (35, 36), it can be locked by way of a rotation about a longitudinal axis of the piston rod (6).

6. Arrangement according to Claim 4, **characterized in that** the piston rod (6) and the securing ring (4) are configured in such a way that, after introduction through the bores (35, 36), the piston rod (6) can be locked by way of a rotation about its longitudinal axis and can be secured by way of a rotation of the securing ring (4) about the same axis, that is to say there is a secured state of the master cylinder (1).

7. Arrangement according to one of the preceding claims, **characterized in that** a wiping ring (16) preferably made from an elastomer for wiping dirt from the piston rod (6) is arranged between the stop ring (2) and the securing ring (4).

8. Arrangement according to Claim 7, **characterized in that** the wiping ring (16) is held in an axial position substantially exclusively by way of pressing forces between the stop ring (2) and the securing ring (4) and/or can be moved with the piston rod (6) in the horizontal direction substantially perpendicularly with respect to the axis of the piston rod (6).

9. Arrangement according to either of Claims 7 and 8, **characterized in that** the wiping ring (16) has openings for securing elements (17, 18) of the securing ring (14) to engage through.

10. Method for securing an actuating linkage of an actuating pedal in a motor vehicle, a piston rod (6) being introduced through a bore (36) of a stop ring (2) into a cylinder housing (3),
the piston rod (6) having a base (7),
the piston rod (6) being rotated about its longitudinal axis for locking against being guided out axially, with the result that the base (7) can come into contact with the base-side surface of the stop ring (2) in the case of axial movements, **characterized in that**, before it is guided through the bore (36) of the stop ring (2), the piston rod (6) is guided through a bore (35) of a securing ring (4),
the securing ring (4) and the longitudinal axis of the piston rod (6) are rotated relative to one another, securing elements (17, 18) of the securing ring (4) are moved through the bore (36) of the stop ring (2), and the securing ring (4) is fastened to the stop ring (2) and/or to the cylinder housing (3) in such a way that the securing elements (17, 18) are provided within the cylinder housing (3) in a manner which is secured against rotation relative to the longitudinal axis of the cylinder housing (3), and that the base (7) would come into contact with the securing elements (17, 18), at least in the case of angular positions relative to the longitudinal axis of the piston rod (6), in which the said base (7) would not come into contact with the stop ring (2) in the case of axial movements.

## Revendications

1. Agencement pour la fixation d'une tringlerie de commande d'une pédale de commande dans un véhicule automobile, comprenant
- un maître-cylindre (1), à l'une des extrémités duquel est disposée une bague de butée (2) pour un piston (5) se trouvant dans le boîtier de cylindre (3) et
- une tige de piston (6) actionnée essentiellement axialement, dont la base de forme sphérique (7) traverse un alésage central (36) de la bague de butée (2) et sollicite la tête de piston,
**caractérisé en ce**
**qu'**une bague de fixation (4) est prévue au niveau du côté de la bague de butée (2) opposé à la base, la bague de fixation (4) présente un alésage essentiellement central (35) à travers lequel passe la base de forme sphérique (7),
l'alésage (36) de la bague de butée (2) présente des méplats (12),
la bague de fixation (4) comprend des éléments de fixation (17, 18) qui traversent l'alésage (36) de la bague de butée (2),
la tige de piston (6) est réalisée de manière à pouvoir être introduite à travers les alésages centraux (35, 36) dans le boîtier de cylindre (3) et à pouvoir être verrouillée par une rotation autour d'un axe longitudinal de la tige de piston (6),
la base (7) de la tige de piston (6) présente au moins une butée (32) qui, dans la position verrouillée, s'engage sous un méplat (12) de la bague de butée (2), et dans le cas d'un déplacement axial de la tige de piston (6), par une butée contre la bague de butée (2), empêche un déplacement de la base (7) hors du boîtier de cylindre (3), et
il existe un état fixé du maître-cylindre (1), dans lequel la bague de fixation (4) est positionnée par rapport à la bague de butée (2) de telle sorte que les éléments de fixation (17, 18) de la bague de fixation (4) soient positionnés sur la périphérie par rapport à la tige de piston (6) de manière à s'écarter des méplats (12) de la bague de butée (2) et que de ce fait la base (7), dans chaque position angulaire de la tige de piston (6), bute lors d'un déplacement axial avec la butée (32) au moins contre un élément appartenant au groupe du méplat (12) ou de l'élément de fixation (17, 18) et empêche de ce fait un déplacement de la base (7) hors du boîtier de cylindre (3).

2. Agencement selon la revendication 1, **caractérisé en ce que** l'alésage (35) de la bague de fixation (4) présente des méplats (14),
ces méplats (14), dans l'état fixé, sont situés au-dessus d'une région courbe (15) de la bague de butée (2) qui est différente des méplats (12),
et **en ce que** les éléments de fixation (17, 18) viennent en prise à travers l'alésage (36) dans cette région courbe (15).

3. Agencement selon la revendication 1 ou 2, **caractérisé en ce que** les éléments de fixation sont réalisés à la manière d'un clip (18) au niveau d'une tige (17), le clip (18) étant disposé à l'extrémité avant de la tige (17) et s'engageant derrière une région courbe (15) de la bague de butée (2) et reliant ainsi la bague de fixation (4) de manière fixée en rotation avec la bague de butée (2).

4. Agencement selon l'une quelconque des revendications précédentes, **caractérisé en ce que** la tige de piston (6) présente avec sa base (7) au niveau de côtés d'axes parallèles opposés, un méplat (10),
la base (7) de la tige de piston (6) est réalisée en forme de bourrelet dans la région entre les méplats (10),
et les méplats (10) correspondent aux méplats (12, 14) de la bague de butée (2) et de la bague de fixation (4), de telle sorte
que la tige de piston (6) puisse être introduite dans un état non fixé avec sa base (7) à travers les alésages (35, 36) dans le boîtier de cylindre (3).

5. Agencement selon la revendication 4, **caractérisé en ce que** la tige de piston (6) est réalisée de telle sorte qu'elle puisse être verrouillée par une rotation autour d'un axe longitudinal de la tige de piston (6) après son introduction à travers les alésages (35, 36).

6. Agencement selon la revendication 4, **caractérisé en ce que** la tige de piston (6) et la bague de fixation (4) sont réalisées de telle sorte que la tige de piston (6), après son introduction à travers les alésages (35, 36), puisse être verrouillée par une rotation autour de son axe longitudinal et puisse être fixée par une rotation de la bague de fixation (4) autour du même axe, c'est-à-dire qu'il existe un état fixé du maître-cylindre (1).

7. Agencement selon l'une quelconque des revendications précédentes, **caractérisé en ce qu'**entre la bague de butée (2) et la bague de fixation (4) est disposée une bague de raclage (16), de préférence en élastomère, pour racler la saleté de la tige de piston (6).

8. Agencement selon la revendication 7, **caractérisé en ce que** la bague de raclage (16) est retenue dans la position axiale essentiellement exclusivement par des forces de pressage entre la bague de butée (2) et la bague de fixation (4) et/ou peut être déplacée avec la tige de piston (6) dans la direction horizontale essentiellement perpendiculairement à l'axe de la tige de piston (6).

9. Agencement selon l'une quelconque des revendications 7 ou 8, **caractérisé en ce que** la bague de raclage (16) présente des ouvertures pour l'engagement d'éléments de fixation (17, 18) de la bague de fixation (14).

10. Procédé de fixation d'une tringlerie de commande d'une pédale de commande dans un véhicule automobile, une tige de piston (6) étant introduite à travers un alésage (36) d'une bague de butée (2) dans un boîtier de cylindre (3),
la tige de piston (6) présentant une base (7),
la tige de piston (6) étant tournée autour de son axe longitudinal en vue d'un verrouillage contre une sortie axiale, de telle sorte que la base (7), lors de déplacements axials, puisse buter contre la surface du côté de la base de la bague de butée (2), **caractérisé en ce que** la tige de piston (6), avant le passage à travers l'alésage (36) de la bague de butée (2), est guidée à travers un alésage (35) d'une bague de fixation (4),
la bague de fixation (4) et l'axe longitudinal de la tige de piston (6) sont tournés l'un par rapport à l'autre,
des éléments de fixation (17, 18) de la bague de fixation (4) sont déplacés à travers l'alésage (36) de la bague de butée (2) et
la bague de fixation (4) est fixée à la bague de butée (2) et/ou au boîtier de cylindre (3) de telle sorte que les éléments de fixation (17, 18) soient fournis par rapport à l'axe longitudinal du boîtier de cylindre (3) de manière solidaire en rotation à l'intérieur du boîtier de cylindre (3), et que la base (7) bute contre les éléments de fixation (17, 18), au moins dans des positions angulaires par rapport à l'axe longitudinal de la tige de piston (6) dans lesquelles elle ne buterait pas contre la bague de butée (2) lors de déplacements axiaux.
